# EUROPÄISCHE PATENTANMELDUNG

(11) **EP 1 308 681 A1**
(43) Veröffentlichungstag der Anmeldung: **07.05.2003**
(21) Anmeldenummer: 02024271.5
(22) Anmeldetag: 31.10.2002
(51) Int. Cl.: F25J 3/08, C01B 13/02

(54) **Verfahren und Vorrichtung zur Erzeugung einer hoch reinen Luftkomponente**

(30) Priorität: 02.11.2001 DE 10153919; 07.02.2002 DE 10205095
(71) Anmelder: Linde Aktiengesellschaft, 65189 Wiesbaden (DE)
(72) Erfinder: Voit, Jürgen, 86938 Schondorf a.A. (DE)
(74) Vertreter: Imhof, Dietmar

(57) **Zusammenfassung**

Das Verfahren und die Vorrichtung dienen zur Erzeugung einer hoch reinen Luftkomponente aus einem weniger reinen Vorprodukt in einem Destilliersäulen-System, das mindestens eine erste Trennsäule (5) aufweist. Ein Strom (4) eines weniger reinen Vorprodukts wird in die erste Trennsäule (5) eingeleitet. Der Trennsäule 5 wird ein hoch reines Produkt (8) entnommen. Das Destilliersäulen-System umfasst außerdem einen ersten Kondensator-Verdampfer (6) und einen zweiten Kondensator-Verdampfer (7), die jeweils einen Verflüssigungsraum und einen Verdampfungsraum aufweisen. Im Verflüssigungsraum des ersten Kondensator-Verdampfers (6) wird Rücklaufflüssigkeit (26) für die oder eine der Trennsäulen (5) und im Verdampfungsraum des zweiten Kondensator-Verdampfers (7) wird aufsteigender Dampf für die oder eine der Trennsäulen (5) erzeugt. In einem Kreislauf-System wird ein Wärmeaustausch-Fluid in einem Verdichter (12) verdichtet, in dem Verflüssigungsraum des zweiten Kondensator-Verdampfers (7) kondensiert, entspannt (19), im Verdampfungsraum des ersten Kondensator-Verdampfers (6) verdampft und schließlich wieder dem Verdichter (12) zugeleitet. Das Wärmeaustausch-Fluid weist einen Stickstoffgehalt von höchstens 95 mol% auf.

## Beschreibung

Die Erfindung betrifft ein Verfahren zur Erzeugung einer hoch reinen Luftkomponente aus einem weniger reinen Vorprodukt in einem Destilliersäulen-System, das mindestens eine erste Trennsäule aufweist, wobei bei dem Verfahren ein Strom eines weniger reinen Vorprodukts in die erste Trennsäule eingeleitet wird und der beziehungsweise einer Trennsäule des Destilliersäulen-Systems ein hoch reines Produkt entnommen wird, wobei das Destilliersäulen-System außerdem einen ersten Kondensator-Verdampfer und einen zweiten Kondensator-Verdampfer umfasst, die jeweils einen Verflüssigungsraum und einen Verdampfungsraum aufweisen, wobei im Verflüssigungsraum des ersten Kondensator-Verdampfers Rücklaufflüssigkeit für die oder eine der Trennsäulen und im Verdampfungsraum des zweiten Kondensator-Verdampfers aufsteigender Dampf für die oder eine der Trennsäulen erzeugt wird, und wobei ferner in einem Kreislauf-System ein Wärmeaustausch-Fluid in einem Verdichter verdichtet, in dem Verflüssigungsraum des zweiten Kondensator-Verdampfers kondensiert, entspannt, im Verdampfungsraum des ersten Kondensator-Verdampfers verdampft und schließlich wieder dem Verdichter zugeleitet wird.

Mit Hilfe eines derartigen Systems kann beispielsweise am Ort eines Verbrauchers kostengünstig erhältliches weniger reines Vorprodukt (zum Beispiel Sauerstoff technischer Reinheit oder Rohargon) flüssig antransportiert werden; aus dieser weniger reinen tiefkalten Flüssigkeit wird mit einer relativ unkomplizierten Apparatur das benötigte hoch reine Produkt hergestellt.

Unter "Luftkomponente" wird hier jeder Stoff verstanden, der in elementarer Form oder als chemische Verbindung in der atmosphärischen Luft enthalten ist, beispielsweise Stickstoff, Sauerstoff oder Argon.

Unter "weniger reinem Vorprodukt" ist eine Fraktion zu verstehen, die hauptsächlich aus der entsprechenden Luftkomponente besteht, aber noch verschiedene Verunreinigungen enthält, die leichter oder schwerer als die Luftkomponente sieden. Es kann sich beispielsweise um Sauerstoff technischer Reinheit handeln. Das "weniger reine Vorprodukt" weist beispielsweise eine Reinheit von mindestens 99 mol%, vorzugsweise mindestens 99,5 mol% auf. Es enthält noch beispielsweise 1,0 mol% oder weniger, vorzugsweise 0,5 mol% oder weniger, beispielsweise 0,1 mol% an Verunreinigungen. Das "weniger reine Vorprodukt" wird beispielsweise durch das Produkt einer benachbarten Tieftemperatur-Luftzerlegungsanlage gebildet und/oder einem Flüssigtank entnommen. Das hoch reine Produkt enthält weniger Verunreinigungen als das Einsatzgemisch. Es weist zum Beispiel noch Verunreinigungen im Umfang von 100 ppm oder weniger, vorzugsweise von 10 ppm oder weniger auf.

Ein Verfahren der eingangs genannten Art und eine entsprechende Vorrichtung sind aus JP 04139004 bekannt. Das System dient zur Herstellung hoch reinen Sauerstoffs. Das Destilliersäulen-System ist als Zwei-Säulen-System ausgebildet und wird mittels eines Kreislaufs beheizt und gekühlt, der mit Stickstoff als Wärmeaustausch-Fluid betrieben wird.

Der Erfindung liegt die Aufgabe zugrunde, ein derartiges Verfahren und/oder eine entsprechende Vorrichtung anzugeben, die wirtschaftlich besonders günstig sind und insbesondere einen relativ geringen Energieverbrauch aufweisen.

Diese Aufgabe wird dadurch gelöst, dass das Wärmeaustausch-Fluid einen Stickstoffgehalt von höchstens 95 mol% aufweist. Durch die Abkehr von der üblichen Verwendung von reinem Stickstoff können die Verdampfungseigenschaften des Wärmeaustausch-Fluids optimal an den Bedarf des Destilliersäulen-Systems angepasst werden. Das Wärmeaustausch-Fluid kann beispielsweise durch ein externes Medium oder durch eine andere Fraktion der Trennsäule(n) gebildet werden. Auf diese Weise kann ein Wärmeaustausch-Fluid eingesetzt werden, das einen energetisch besonders günstigen Betrieb des Verfahrens ermöglicht.

Als Wärmeaustausch-Fluid wird bei der Erfindung beispielsweise eines der in der unten stehenden Tabelle erwähnten Fluide eingesetzt werden (die Konzentrationsangaben an Stickstoff, Argon und Sauerstoff sind als molare Mengen zu verstehen):

| *Nr*. | *Bezeichnung* | *N*_{*2*}*-Gehalt* | *Ar-Gehalt* | *O*_{*2*}*-Gehalt* |
|---|---|---|---|---|
| 1 | Luft | 0,78118 | 0,00932 | 0,2095 |
| 2 | O₂-angereichert | 0,06 | 0,005 | 0,395 |
| 3 | Unrein-O₂ | 0,30 | 0,005 | 0,695 |
| 4 | Reiner O₂ | 0,00 | 0,005 | 0,995 |
| 5 | Unrein-N₂ | 0,98 | 01,005 | 0,0015 |
| 6 | Reiner N₂ | 0,999 | 0,001 | 0,00 |

Kreislaufverluste können aus der beziehungsweise einer der Trennsäulen ergänzt werden, oder aber aus einer externen Quelle außerhalb des Destilliersäulen-Systems, beispielsweise einer vorgeschalteten Luftzerlegungs-Anlage oder von einem Flüssigtank. In dem Kreislaufsystem kann Kälte durch arbeitsleistende Entspannung erzeugt werden, indem ein Fluidstrom aus dem Verdichter vom Wärmeaustausch-Fluid abgezweigt und einer oder mehreren Entspannungsmaschinen (zum Beispiel Turbinen) zugeleitet wird.

Dabei ist es günstig, wenn kein Teil des Wärmeaustausch-Fluids in das Innere der ersten Trennsäule oder in das Innere einer der Trennsäulen des Destilliersäulen-Systems eingeführt beziehungsweise zurückgeführt wird.

Das Destilliersäulen-System kann als Einzelsäulensystem oder als Zwei- oder Mehr-Säulen-System ausgebildet sein. Im Fall eines Zwei-Säulen-Systems wird ein Zwischenprodukt aus der ersten Trennsäule entnommen und einer zweiten Trennsäule zugeleitet, der schließlich das hoch reine Produkt entnommen wird. Die Konfiguration und Verbindung der Säulen eines derartigen Zwei-Säulen-System ist den Ausführungsbeispielen der älteren deutschen Patentanmeldungen 10158330 und 10153919 und der dazu korrespondierenden Patentanmeldungen zu entnehmen.

Insbesondere dann, wenn die Einsatzfraktion mindestens zeitweise aus einem Speichertank herangeführt wird, ist es günstig, wenn der Strom des weniger reinen Vorprodukts in flüssiger Form in die erste Trennsäule eingeleitet wird. Hierdurch können die Vorteile flüssiger Lagerung genutzt werden und die Verflüssigungskälte geht nicht verloren, sondern kann in dem Destilliersäulen-System nutzbringend eingesetzt werden.

Wenn das hoch reine Produkt dem Destilliersäulen-System in flüssiger Form entnommen wird, kann dieses ebenfalls in einem Flüssigtank gelagert beziehungsweise gepuffert werden, bevor es einem Verbraucher zugeleitet wird.

Die Erfindung betrifft außerdem eine Vorrichtung zur Erzeugung einer hoch reinen Luftkomponente gemäß den Patentansprüchen 8 bis 10.

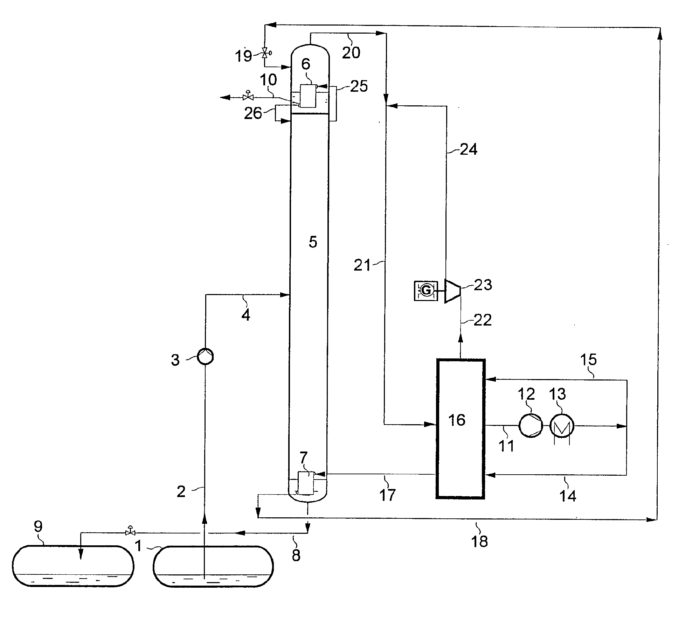

Die Erfindung sowie weitere Einzelheiten der Erfindung werden im Folgenden anhand eines in der Zeichnung dargestellten Ausführungsbeispiels näher erläutert, das sich auf die Herstellung hoch reinen Sauerstoffs bezieht..

In einem ersten Speichertank 1 wird Sauerstoff einer Reinheit von 99,5 mol% ("weniger reines Vorprodukt") flüssig gelagert. Der Speichertank 1 wird beispielsweise aus einer benachbarten Luftzerlegungs-Anlage oder von Tankfahrzeugen gespeist. Über eine Einsatzleitung 2, 4 wird flüssiger, weniger reiner Sauerstoff mittels einer Pumpe 3 in eine Trennsäule 5 gefördert. Die Zuspeisung erfolgt etwa auf mittlerer Höhe.

Die Trennsäule (5) ist als Einzelsäule ausgebildet und bildet in dem Ausführungsbeispiel zusammen mit einem Kopfkondensator ("erster Kondensator-Verdampfer") 6 und einem Sumpfverdampfer ("zweiter Kondensator-Verdampfer") 7 das "Destilliersäulen-System". In dem Kopfkondensator wird Kopfdampf 25 der Trennsäule mindestens teilweise verflüssigt. Das dabei gewonnene Kondensat 26 wird in die Trennsäule 5 zurückgeleitet und dort als Rücklauf eingesetzt. Nicht kondensiertes Gas wird vom Kopf der Trennsäule 5 beziehungsweise aus dem Verflüssigungsraum des Kopfkondensators 6 als Restfraktion 10 abgezogen. Vom Sumpf der Trennsäule 5 wird hoch reines Sauerstoffprodukt 8 flüssig entnommen und in einen zweiten Speichertank 9 eingeleitet.

Das in dem Ausführungsbeispiel gezeigte System weist einen Kreislauf auf, der zum Beispiel mit Fluid Nr. 3 aus der oben stehenden Tabelle als Wärmeaustausch-Fluid betrieben wird und zur Kühlung beziehungsweise Beheizung der beiden Kondensator-Verdampfer 6 und 7 dient. Gasförmiges Wärmeaustausch-Fluid 11 wird in einem Verdichter 12 mit Nachkühler 13 auf ein Druck von beispielsweise 6 bis 16 bar, vorzugsweise 10 bis 12 bar gebracht und anschließend in einem ersten Teilstrom 14 und einen zweiten Teilstrom 15 aufgeteilt.

Der erste Teilstrom 14 des Wärmeaustausch-Fluids wird in einen Kreislauf-Wärmetauscher 16 eingeleitet, dort abgekühlt, am kalten Ende des Kreislauf-Wärmetauschers 16 entnommen (17) und dem Verflüssigungsraum des Sumpfverdampfers 7 zugeleitet. Das verflüssigte Wärmeaustausch-Fluid 18 wird in einem Drosselventil 19 auf etwa den Eintrittsdruck des Verdichters 12 (beispielsweise 5 bis 15 bar, vorzugsweise 9 bis 11 bar) entspannt und im Verdampfungsraum des Kopfkondensators 6 verdampft. Dabei gebildetes Gas 20 wird über Leitung 21 zum kalten Ende des Kreislauf-Wärmetauschers 16 und weiter über Leitung 11 zum Eintritt des Verdichters 12 zurückgeführt.

Nur auf eine Zwischentemperatur abgekühlt wird der zweite Teilstrom 15 des verdichteten Wärmeaustausch-Fluids. Unter dieser Zwischentemperatur wird der zweite Teilstrom 22 zum Eintritt einer Generator-gebremsten Turbine 23 geleitet, dort arbeitsleistend auf etwa den Eintrittsdruck des Verdichters 12 entspannt und schließlich über die Leitungen 24, 21,11 wieder dem Verdichter 12 zugeführt.

Die Vorrichtungsteile bzw. Verfahrensschritte zur internen Kälteerzeugung 15, 22, 23 und 24 können entfallen, wenn stattdessen Fremdkälte zum Ausgleich der Kälteverluste eingesetzt wird.

## Patentansprüche

1. Verfahren zur Erzeugung einer hoch reinen Luftkomponente aus einem weniger reinen Vorprodukt in einem Destilliersäulen-System, das mindestens eine erste Trennsäule (5) aufweist, wobei bei dem Verfahren ein Strom (4) eines weniger reinen Vorprodukts in die erste Trennsäule (5) eingeleitet wird und der beziehungsweise einer Trennsäule des Destilliersäulen-Systems ein hoch reines Produkt (8) entnommen wird, wobei das Destilliersäulen-System außerdem einen ersten Kondensator-Verdampfer (6) und einen zweiten Kondensator-Verdampfer (7) umfasst, die jeweils einen Verflüssigungsraum und einen Verdampfungsraum aufweisen, wobei im Verflüssigungsraum des ersten Kondensator-Verdampfers (6) Rücklaufflüssigkeit (26) für die oder eine der Trennsäulen (5) und im Verdampfungsraum des zweiten Kondensator-Verdampfers (7) aufsteigender Dampf für die oder eine der Trennsäulen (5) erzeugt wird, und wobei ferner in einem Kreislauf-System ein Wärmeaustausch-Fluid in einem Verdichter (12) verdichtet, in dem Verflüssigungsraum des zweiten Kondensator-Verdampfers (7) kondensiert, entspannt (19), im Verdampfungsraum des ersten Kondensator-Verdampfers (6) verdampft und schließlich wieder dem Verdichter (12) zugeleitet wird, **dadurch gekennzeichnet, dass** das Wärmeaustausch-Fluid einen Stickstoffgehalt von höchstens 95 mol% aufweist.

2. Verfahren nach Anspruch 1, **dadurch gekennzeichnet, dass** kein Teil des Wärmeaustausch-Fluids in das Innere der ersten Trennsäule (5) eingeführt wird.

3. Verfahren nach Anspruch 2, **dadurch gekennzeichnet, dass** kein Teil des Wärmeaustausch-Fluids in das Innere einer der Trennsäulen (5) des Destilliersäulen-Systems eingeführt wird.

4. Verfahren nach einem der Ansprüche 1 bis 3, **dadurch gekennzeichnet, dass** das Destilliersäulen-System als Einzelsäulensystem ausgebildet ist.

5. Verfahren nach einem der Ansprüche 1 bis 3, **dadurch gekennzeichnet, dass** das Destilliersäulen-System eine zweite Trennsäule aufweist, wobei ein Zwischenprodukt aus der ersten Trennsäule entnommen und der zweiten Trennsäule zugeleitet und das hoch reine Produkt der zweiten Trennsäule entnommen wird.

6. Verfahren nach einem der Ansprüche 1 bis 5, **dadurch gekennzeichnet, dass** der Strom (4) des weniger reinen Vorprodukts in flüssiger Form in die erste Trennsäule (5) eingeleitet wird.

7. Verfahren nach einem der Ansprüche 1 bis 6, **dadurch gekennzeichnet, dass** das hoch reine Produkt (8) dem Destilliersäulen-System in flüssiger Form entnommen wird.

8. Vorrichtung zur Erzeugung einer hoch reinen Luftkomponente aus einem weniger Vorprodukt mit einem Destilliersäulen-System, das mindestens eine erste Trennsäule (5) sowie einen ersten Kondensator-Verdampfer (6) und einen zweiten Kondensator-Verdampfer (7), die jeweils einen Verflüssigungsraum und einen Verdampfungsraum aufweisen, umfasst, mit einer Einsatzleitung (2, 4) zur Einleitung eines Stroms eines weniger reinen Vorprodukts in die erste Trennsäule (5), mit einer Produktleitung (8) zur Entnahme eines hoch reinen Produkts aus dem Destilliersäulen-System, wobei der Verflüssigungsraum des ersten Kondensator-Verdampfers (6) in Strömungsverbindung mit dem oberen Bereich der oder einer der Trennsäulen (5) und der Verdampfungsraum des zweiten Kondensator-Verdampfers (7) in Strömungsverbindung mit dem unteren Bereich der oder einer der Trennsäulen (5) steht, und mit einem Kreislauf-System, das einen Verdichter (12) aufweist sowie ein Hochdruckleitung (14, 17), die vom Austritt des Verdichters (12) zum Verflüssigungsraum des zweiten Kondensator-Verdampfers (7) führt, und eine Niederdruckleitung (20, 21, 11), die vom Verdampfungsraum des ersten Kondensator-Verdampfers (6) zum Eintritt des Verdichters (12) führt, **gekennzeichnet durch** Mittel zum Einleiten eines Wärmeaustausch-Fluids, einen Stickstoffgehalt von höchstens 95 mol% aufweist, in das Kreislauf-System.

9. Vorrichtung nach Anspruch 8, **gekennzeichnet durch** Mittel zur Herstellung einer Strömungsverbindung zwischen einer Quelle (1) für weniger reines Vorprodukt und der Einsatzleitung (2, 4).

10. Vorrichtung nach Anspruch 8 oder 9, **dadurch gekennzeichnet, dass** das Kreislauf-System nicht in Strömungsverbindung mit dem Inneren der Trennsäule(n) (5) des Destilliersäulen-Systems steht.
